# EUROPEAN PATENT SPECIFICATION

(11) **EP 1 256 432 B1**
(45) Date of publication and mention of the grant of the patent: **06.09.2006**
(21) Application number: 02010104.4
(22) Date of filing: 07.05.2002
(51) Int. Cl.: B29C 45/14, B60R 13/04, B60R 13/06

(54) **Method for production of a moulding for an outer metal surface of a motor vehicle, and moulding obtained by means of this method**
Verfahren zur Herstellung eines Formteiles für eine Aussenmetalloberfläche eines Kraftfahrzeuges und mit diesem Verfahren erhaltenes Formteil
Procédé pour la fabrication d'une pièce moulée pour une surface métallique externe d'un véhicule automobile ainsi que pièce moulée obtenue

(30) Priority: 08.05.2001 IT TO20010436
(43) Date of publication of application: 13.11.2002
(73) Proprietor: FIAT AUTO S.p.A., 10135 Torino (IT)
(72) Inventor: Beltramo, Carlo, 10136 Torino (IT); Zeccardo, Samuele, 10043 Collegno (IT)
(74) Representative: Jorio, Paolo

(56) References cited:
- EP-A- 0 301 866
- WO-A-01/42058
- US-A- 3 147 176
- US-A- 3 582 134
- US-A- 4 726 614
- US-A- 4 871 205
- US-A- 5 267 763
- PATENT ABSTRACTS OF JAPAN vol. 018, no. 644 (M-1718), 7 December 1994 (1994-12-07) -& JP 06 249342 A (KINUGAWA RUBBER IND CO LTD), 6 September 1994 (1994-09-06)
- PATENT ABSTRACTS OF JAPAN vol. 1998, no. 02, 30 January 1998 (1998-01-30) & JP 09 263195 A (IGAWA AKIRA), 7 October 1997 (1997-10-07)

## Description

The present invention relates to a method for production of an additional element for an outer metal surface of a motor vehicle, and, in particular, to a moulding to be connected along the sides of the motor vehicle itself.

As is known, the sides of motor vehicles are provided with mouldings, which are defined by strips or bands made of plastic material, which can protect the body and the side doors against minor parking impacts, and/or can provide the motor vehicle with particular aesthetic appeal.

In most applications, the known mouldings are secured to the sides by means of plastic pins, to be snapped into the sides themselves; alternatively, the mouldings are secured by being glued.

Although the aforementioned known methods for connection are widely used, they are unsatisfactory, since they require operations or processing which involve times which are relatively lengthy, and therefore costs which are relatively high, and require the use of dedicated tooling and machines, to be positioned accurately in relation to the motor vehicle.

In particular, in the case of securing by means of pins, it is necessary firstly to produce the pins, and, secondly, to form a series of holes for passage and retention of the pins themselves, in the body and in the doors.

On the other hand, in the case of securing by means of gluing, it is necessary to clean the surfaces to be glued, in order to eliminate any traces of grease and dust, which would detract from the sealing of the adhesive material, and to exert relatively high pressure on the moulding during securing to the sides, in order to guarantee firm, regular sealing along the entire moulding itself.

Again in order to guarantee the sealing, it is then necessary to provide support surfaces which have relatively extensive dimensions, whereas, in the case of injection moulding, the presence of transverse cross-sections which are relatively large, and have a complex shape, can give rise to the presence of surface faults, which detract from the aesthetic appeal of the mouldings.

US3582134, US4726614 and JP6249342 disclose strips to which magnets are coupled for securing the strips to a door or a side body panel of a vehicle. In particular, the magnets are coupled by insertion in respective seats of the strip.

EP0301866 discloses a process for producing a magnetic hub for an optical disc to be fixed in use to the spindle of a disc drive by means of a magnetic clamp system; the process comprises positioning and setting an annular metal plate composed of a ferromagnetic substance in a mould and then injecting a resin into the mould.

The object of the present invention is to provide a method for production of an additional element, in particular a moulding, for an outer metal surface of a motor vehicle, which makes it possible to solve the aforementioned problems, and which, in particular, relatively simple and quick to connect to the motor vehicle.

According to the present invention, a method is provided for production of an additional element for an outer metal surface of a motor vehicle; the method comprising the steps of producing an outer body for the said outer surface, the production of the said outer body comprising the step of injecting a plastic material into a forming mould; and being characterised in that the production of the said outer body comprises the steps of positioning at least one magnetic body in the said forming mould, and injecting the said plastic material such as to embed the said magnetic body partially, leaving free a adhesion surface which delimits the magnetic body itself, and, in use, can be disposed in a position facing the said outer surface; and in that it additionally comprises the step of inserting at least one metal body in the said plastic material of the said outer body.

The present invention also relates to an additional element for a metal body of a motor vehicle.

According to the present invention, an additional element is provided for an outer metal surface of a motor vehicle; the additional element comprising an outer body which is made of plastic material, for the said outer surface; and at least one magnetic body, which is partially embedded in the said outer body, and is delimited by a free adhesion surface, which, in use, can be disposed in a position facing the said outer surface; characterised in that said outer body is obtainable by co-moulding onto said magnetic body; the additional element comprising at least one metal body, which is embedded in the said outer body.

The invention will now be described with reference to the attached drawings, which illustrate a nonlimiting exemplary embodiment of it, in which:
figure 1 illustrates a preferred embodiment of an additional element, in particular of a moulding produced according to the present invention, for an outer metal surface of a motor vehicle;
figure 2 illustrates the moulding in figure 1, on an enlarged scale and in transverse cross-section; and
figure 3 is a partial rear perspective view, on an enlarged scale, of the moulding in figure 1.

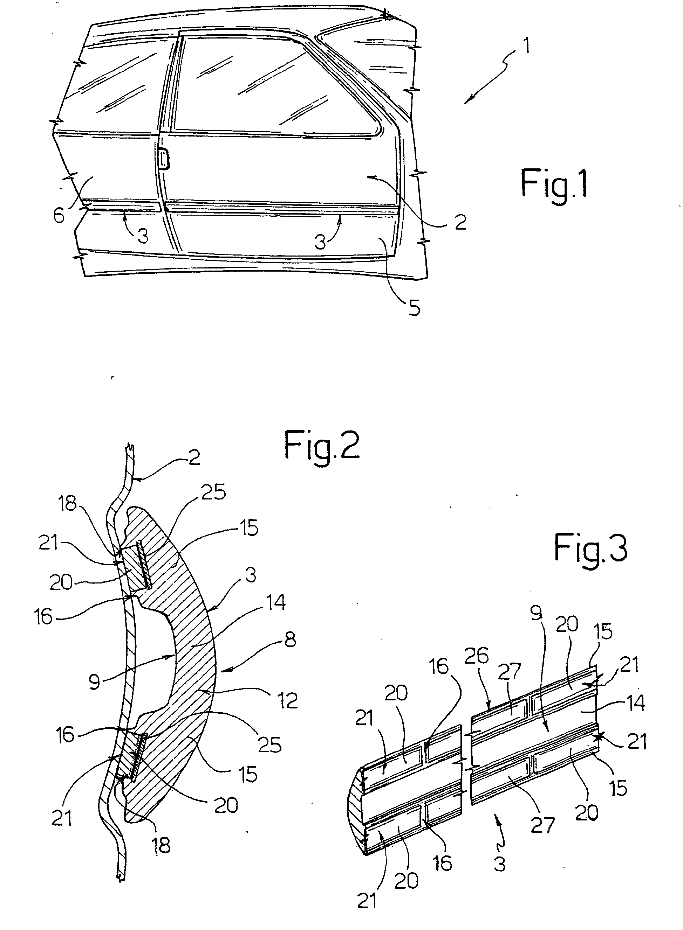

In figure 1, 1 indicates a motor vehicle (partially illustrated), the sides 2 of which (only one of which is illustrated) each delimit the outer metal plate of a side door 5, and part of the metal body 6 of the motor vehicle 1.

Each side 2 supports a plurality of additional elements, in particular a plurality of mouldings 3 which are aligned with one another, to which the following description refers specifically, without detracting from generality.

The mouldings 3 have the purpose of protecting the side 2 itself against lateral impacts of a relatively minor extent, and/or of providing the motor vehicle 1 itself with particular aesthetic appeal. As illustrated in figures 2 and 3, each moulding 3 is in the form of a strip which is elongate in the longitudinal direction, and is delimited by two shaped surfaces 8 and 9 which are opposite one another, of which the surface 8 is convex and faces the exterior, whereas the surface 9 faces the corresponding side 2.

The surface 8 delimits a body 12 for finishing and/or protection of the side 2, which has a transverse cross-section in the shape of a C, and is made of plastic material, for example of polypropylene filled with talc and/or with mineral fillers, ABS, PC and ABS, or PVC.

The body 12 comprises an intermediate portion 14, which is hollowed out from the part of the surface 9, and two lateral portions 15, which are disposed on opposite sides of the intermediate portion 14, are spaced from one another, have a form which is elongate longitudinally, and are substantially parallel to one another.

Each lateral portion 15 is delimited by a corresponding support surface 16, which is disposed in contact with the side 2, and has a corresponding row of blind seats 18, which are provided through the corresponding surface 16, in positions which are longitudinally spaced from one another, and accommodate respective permanent magnets 20. Each magnet 20 is defined by an elongate strip, and is delimited by a corresponding adhesion surface 21, which is coplanar to the surfaces 16.

Each moulding 3 additionally comprise a pair of bars 25, which are preferably made of steel, are used to orient the magnetic field, and are each completely embedded in a corresponding lateral portion 15, on the side opposite the surfaces 21 relative to the magnets 20, and in contact with the magnets 20 themselves.

Finally, each moulding 3 comprises a safety retention device 26, which serves an anti-theft purpose, i.e. it is designed to prevent possible removal of the moulding 3 itself from the corresponding side 2, and comprises a plurality of portions 27 of double-sided-adhesive tape, which are glued firstly to the surfaces 16, and secondly to the side 2 (figure 3).

The moulding 1 is formed by placing the magnets 20 and the bars 25 in respective fixed positions in a forming mould, and then injecting plastic material into the mould itself, in order to embed the magnets 20 partially, and to embed the bars 25 completely in the body 12. This therefore involves a process of co-moulding, after which the magnets 20 and the bars 25 are retained in the body 12, whereas the surfaces 21 remain uncovered, in order to constitute part of the surface 9, and, in particular, are coplanar to the surfaces 16.

Thus, in use, the surfaces 21 are supported directly against the side 2, without interposition of other elements.

The magnets 20 are selected in a material which is such as to maintain its own magnetic properties, even in the presence of the relatively high temperatures which exist during the operation of injecting plastic material into the forming mould.

Before being applied to the side 2, the portions 27 of double-sized-adhesive tape are glued to the surfaces 16 in one or more areas of the body 12, in order to prevent any attempts to remove the moulding 3.

It is apparent from the foregoing description that the method described makes it possible to obtain a moulding 3, fitting of which onto the motor vehicle 1 is extremely simple and quick, and involves short times and low costs, since the moulding 3 itself is already provided with magnets 20 for adhesion to the side 2.

In fact, the permanent magnets 20 adhere to the side 2 itself automatically, and guarantee sealing which is stable over a period of time, and regular, without needing to use and position dedicated tooling or machines, in order to press the body 12 onto the side 2 itself, and/or to perforate the body 6 and the plate of the door 5.

At the same time, the above-described method is extremely simple and quick, and relatively economical to implement, since the body 12 is co-moulded directly onto the magnets 20.

The portions 27 of double-sided-adhesive tape serve the function only of security retention, such that it is not necessary to provide extensive areas on which to glue the portions 27 themselves, and/or to use dedicated machines in order to guarantee regular sealing.

Also owing to use of the magnets 20, it is possible to produce bodies 12 with simple shapes, in order to avoid the occurrence of faults on the surface 9, caused by the injection moulding.

Finally, it is apparent from the foregoing information that modifications and variations which do not depart from the field of protection of the present invention can be made to the above-described method and moulding 3.

In particular, the body 12 and the magnets 20 could have forms other than those illustrated and described, the magnets 20 could be disposed along the surface 9 in positions other than those indicated, and/or a single magnet 20 could also be provided, for example in the case of relatively small bodies 12. In addition, the bars 25 could be connected to the body 12 in positions and/or using methods other than those described, and/or the safety retention device 26 could be different from that indicated by way of example.

Finally, the body 12 could have solely an aesthetic function, and/or it could define an additional element other than the moulding 3 described, for example an insignia, a badge, or an information support element for nameplates, numbers, symbols or figures which are normally added or applied to the outer body of the motor vehicles, and/or it could be applied to outer metal surfaces of the motor vehicle other than the sides 2, for example on the outer roof panel.

## Claims

1. Method for production of an additional element (3) for an outer metal surface (2) of a motor vehicle (1); the method comprising the steps of producing an outer body (12) for the said outer surface (2); the production of the said outer body (12) comprising the step of injecting a plastic material into a forming mould; and being **characterised in that** the production of the said outer body (12) comprises the steps of positioning at least one magnetic body (20) in the said forming mould, and injecting the said plastic material such as to embed the said magnetic body (20) partially, leaving free a adhesion surface (21) which delimits the magnetic body (20) itself, and, in use, can be disposed in a position facing the said outer surface (2); and **in that** it additionally comprises the step of inserting at least one metal body (25) in the said plastic material of the said outer body (12).

2. Method according to claim 1, **characterised in that** the production of the said outer body (12) comprises the step of producing a support surface (16), to be disposed, in use, against the said outer surface (2), and coplanar to the said adhesion surface (21).

3. Method according to claim 1 or claim 2, **characterised in that** the said outer body (12) is created by producing two lateral portions (15), which are spaced from one another, and are each delimited by a corresponding support surface (16), and by embedding at least one corresponding said magnetic body (20) in each said lateral portion (15).

4. Method according to claim 3, **characterised by** production of the said lateral portions (15) which have an elongate shape and are substantially parallel to one another, and by partial embedding of a corresponding plurality of the said magnetic bodies (20), in each lateral portion (15).

5. Method according to any one of the preceding claims, **characterised in that** it additionally comprises the step of connecting to the said outer body (12) security retention means (26), which can co-operate with the said outer surface (2).

6. Method according to claim 5, **characterised in that** the connection of the said security retention means (26) comprises the operation of gluing a double-sided adhesive tape (27) to a support surface (16) of the said outer body (12), which is distinct from the said adhesion surface (21).

7. Method according to anyone of the preceding claims, **characterised in that** the insertion of the said metal body (25) comprises the operations of disposing the said metal body (25) in the said forming mould, and injecting the said plastic material such as to embed the metal body (25) itself.

8. Additional element (3) for an outer metal surface (2) of a motor vehicle (1); the additional element comprising an outer body (12) which is made of plastic material, for the said outer surface (2); and at least one magnetic body (20), which is partially embedded in the said outer body (12), and is delimited by a free adhesion surface (21), which, in use, can be disposed in a position facing the said outer surface (2); **characterised in that** said outer body (12) is obtainable by co-moulding onto said magnetic body (20); the additional element comprising at least one metal body (25), which is embedded in the said outer body (12).

9. Additional element according to claim 8, **characterised in that** it comprises a support surface (16), to be disposed, in use, against the said outer surface (2); the said adhesion and support surfaces (21) (16) being coplanar to one another.

10. Additional element according to claim 8 or claim 9, **characterised in that** the said outer body (12) comprises two lateral portions (15), which are spaced from one another and delimited by corresponding support surfaces (16), and **in that** it comprises at least one corresponding said magnetic body (20), which is partially embedded in each said lateral portion (15).

11. Additional element according to claim 10, **characterised in that** the said lateral portions (15) have an elongate shape, and are substantially parallel to one another, and **in that** it comprises a corresponding plurality of said magnetic bodies (20) embedded in each said lateral portion (15).

12. Additional element according to any one of claims 8 to 11, **characterised in that** it additionally comprises safety retention means (26), which are connected to the said outer body (12), and can co-operate with the said outer surface (2).

13. Additional element according to claim 12, **characterised in that** the said safety retention means (26) comprise a double-sided adhesive tape (27), which is glued to a support surface (16) of the said outer body (12), which is distinct from the said adhesion surface (21).

14. Additional element according to anyone of claims 8 to 13, **characterised in that** the said metal body (25) is disposed in contact with the said magnetic body (20).

## Patentansprüche

1. Verfahren zur Herstellung eines zusätzlichen Elements (3) für eine äußere Metalloberfläche (2) eines Kraftfahrzeugs (1); das Verfahren enthält die Schritte zur Herstellung eines äußeren Körpers (12) für besagte äußere Oberfläche (2); die Herstellung besagten äußeren Körpers (2) beinhaltet den Schritt des Spritzgießens von einem Kunststoffmaterial in eine Hohlform; und ist **dadurch gekennzeichnet, daß** die Herstellung besagten äußeren Körpers die Schritte der Positionierung von wenigstens einem magnetischen Körper (20) in besagter Hohlform beinhaltet, und das Eintragen besagten Plastikmaterials derart, daß besagter Magnetkörper (20) teilweise eingebettet wird unter Freilassung einer Adhäsionsoberfläche (21), welche den Magnetkörper (20) selbst begrenzt und in Gebrauchsstellung in einer Position angebracht werden kann, welche besagte äußere Oberfläche (2) ansieht; und darin, daß zusätzlich der Schritt vorgesehen ist, wenigstens einen Metallkörper (25) in besagtem Kunststoffmaterial des besagten äußeren Körpers (12) einzusetzen.

2. Verfahren nach Anspruch 1, **dadurch gekennzeichnet, daß** die Herstellung des besagten äußeren Körpers (12) den Schritt beinhaltet, eine tragende Oberfläche (16) herzustellen, die in Gebrauchsstellung gegenüber besagter äußerer Oberfläche (2) angeordnet ist und koplanar zu besagter Adhäsionsoberfläche (21) ist.

3. Verfahren nach Anspruch 1 oder 2, **dadurch gekennzeichnet, daß** besagter äußerer Körper (12) durch Herstellung zweier seitlicher Bereiche (15) erzeugt wird, die voneinander beabstandet sind und die durch jeweils eine korrespondierende tragende Oberfläche (16) begrenzt werden und durch Einbettung von wenigstens einem korrespondierenden besagten Magnetkörper (20) in jedem besagten seitlichen Bereich (15).

4. Verfahren nach Anspruch 3, **dadurch gekennzeichnet, daß** besagte seitliche Bereiche (15) hergestellt werden, die eine längliche Form besitzen und im wesentlichen parallel zueinander sind und durch partielles Einbetten einer korrespondierenden Mehrheit besagter magnetischer Körper (20) in jedem seitlichen Bereich (15).

5. Verfahren nach einem der vorgegangenen Ansprüche, **dadurch gekennzeichnet, daß** es zusätzlich den Schritt vorsieht, sicherheitsbewahrenden Mittel (26) an besagtem äußeren Körper (12) zu verbinden, die mit besagter äußerer Oberfläche (2) kooperieren können.

6. Verfahren nach Anspruch 5, **dadurch gekennzeichnet, daß** die Verbindung besagter sicherheitsbewahrender Mittel (26) den Schritt zum Verkleben eines doppelseitigen selbstklebenden Bandes (27) an einer tragfähigen Fläche (16) besagten äußeren Körpers (12) beinhaltet, die sich von besagter Adhäsionsoberfläche (21) unterscheidet.

7. Verfahren nach einem der vorangegangenen Ansprüche, **dadurch gekennzeichnet, daß** die Einbringung besagten Metallkörpers (25) den Schritt enthält, besagten Metallkörper (25) in besagter Hohlform anzuordnen und das Einbringen besagten Kunststoffmaterials zum Einbetten besagten Metallkörpers (25) selbst dient.

8. Zusatzelement (3) für eine äußere Metalloberfläche (2) eines Kraftfahrzeugs (1); das zusätzliche Element enthält einen äußeren Körper (12), der aus Kunststoffmaterial hergestellt ist für besagte äußere Oberfläche (2); sowie wenigstens einen magnetischen Körper (20) der teilweise in besagtem äußeren Körper (12) eingebettet ist und durch eine freie Adhäsionsoberfläche (21) begrenzt ist, die, in Gebrauchsstellung, in eine Position gebracht werden kann, in welcher sie besagte äußere Oberfläche (2) ansieht; **gekennzeichnet dadurch, daß** besagter äußerer Körper (12) durch Koextrusion auf besagtem Magnetkörper (12) erhältlich ist; das zusätzliche Element enthält wenigstens einen Metallkörper (25), der in besagtem äußeren Körper (12) eingebettet ist.

9. Zusatzelement nach Anspruch 8, **dadurch gekennzeichnet, daß** es eine tragfähige Oberfläche (16) enthält, die in Gebrauchsstellung gegenüber besagter äußerer Fläche (2) anzuordnen ist; die besagten Adhäsions- und tragenden Oberflächen (21, 16) sind zueinander koplanar.

10. Zusatzelement nach Anspruch 8 oder 9, **dadurch gekennzeichnet, daß** besagter äußerer Körper (12) zwei seitliche Bereiche (15) enthält, die voneinander beabstandet sind und durch korrespondierende tragfähige Flächen (16) begrenzt sind und darin, daß es wenigstens einen korrepondierenden besagten Magnetkörper (20) vorsieht, der teilweise im jeweils besagtem seitlichen Bereich (15) eingebettet ist.

11. Zusatzelement nach Anspruch 10, **dadurch gekennzeichnet, daß** besagte seitliche Bereiche (15) eine längliche Form haben und im wesentlichen parallel zueinander sind und darin, daß eine korrespondierende Vielzahl besagter Magnetkörper (20) vorgesehen ist, die in jeweils besagtem seitlichen Bereich (15) einbettet sind.

12. Zuatzelement nach einem der Ansprüche 8 bis 11, **dadurch gekennzeichnet, daß** zusätzlich sicherheitsbewahrende Mittel (26) vorgesehen sind, die mit besagtem äußeren Körper (12) verbunden sind und die mit besagter äußerer Oberfläche (2) kooperieren können.

13. Zusatzelement nach Anspruch 12, **dadurch gekennzeichnet, daß** besagte sicherheitsbewahrende Mittel (26) ein doppelseitiges Klebeband (27) enthalten, welches auf eine tragfähige Oberfläche (16) besagten äußeren Körpers (12) aufgeklebt ist, die sich von besagter Adhäsionsoberfläche (21) unterscheidet.

14. Zusatzelement nach einem der Ansprüche 8 bis 13, **dadurch gekennzeichnet, daß** besagter Metallkörper (25) in Kontakt mit besagtem Magnetkörper (20) angeordet ist.

## Revendications

1. Procédé de production d'un élément additionnel (3) pour une surface de métal externe (2) d'un véhicule à moteur (1) ; le procédé comprenant les étapes consistant à produire un corps externe (12) pour ladite surface externe (2) ; la production dudit corps externe (12) comprenant l'étape d'injection d'un matériau plastique dans un moule de formage ; et étant **caractérisé en ce que** la production dudit corps externe (12) comprend les étapes de positionnement d'au moins un corps magnétique (20) dans ledit moule de formage, et d'injection dudit matériau plastique de façon à ce qu'il enrobe partiellement ledit corps magnétique (20), laissant libre une surface d'adhésion (21) qui délimite le corps magnétique (20) lui-même et, en pratique, puisse être disposé dans une position faisant face à ladite surface externe (2) ; et **en ce qu'**il comprenne en outre l'étape d'insertion d'au moins un corps métallique (25) dans ledit matériau plastique dudit corps externe (12).

2. Procédé selon la revendication 1, **caractérisé en ce que** la production dudit corps externe (12) comprend l'étape consistant à produire une surface d'appui (16), pour qu'elle soit en pratique disposée contre ladite surface externe (2), et coplanaire à ladite surface d'adhésion (21).

3. Procédé selon la revendication 1 ou la revendication 2, **caractérisé en ce que** ledit corps externe (12) est créé en produisant 2 portions latérales (15), qui sont espacées l'une de l'autre, et sont chacune délimitées par une surface d'appui correspondante (16), et enrobant au moins un dit corps magnétique correspondant (20) dans chaque dite portion latérale (15).

4. Procédé selon la revendication 3, **caractérisé par** la production desdites portions latérales (15) qui ont une forme allongée et sont substantiellement parallèles l'une à l'autre, et par l'enrobage partiel d'une pluralité correspondante desdits corps magnétiques (20), dans chaque portion latérale (15).

5. Procédé selon l'une quelconque des revendications précédentes, **caractérisé en ce qu'**il comprend en outre l'étape de connexion audit corps externe (12) des moyens sûrs de maintien (26), qui peuvent coopérer avec ladite surface externe (2).

6. Procédé selon la revendication 5, **caractérisé en ce que** la connexion aux dits moyens sûrs de maintien (26) comprend l'opération consistant à coller un adhésif double face (27) à une surface d'appui (16) dudit corps externe (12), qui est distinct de ladite surface d'adhésion (21).

7. Procédé selon l'une quelconque des revendications précédentes, **caractérisé en ce que** l'insertion dudit corps métallique (25) comprend les opérations consistant à disposer ledit corps métallique (25) dans ledit moule de formage, et à injecter ledit matériau plastique de façon à enrober le corps métallique (25) lui-même.

8. Élément additionnel (3) pour une surface métallique externe (2) d'un véhicule à moteur (1) ; l'élément additionnel comprenant un corps externe (12) constitué de matériau plastique, pour ladite surface externe (2) ; et au moins un corps magnétique (20), lequel est partiellement incorporé dans ledit corps externe (12), et est délimité par une surface d'adhésion libre (21), qui, en pratique, peut être disposée dans une position faisant face à ladite surface externe (2) ; **caractérisé en ce que** ledit corps externe (12) s'obtient par co-moulage sur ledit corps magnétique (20) ; l'élément additionnel comprenant au moins un corps métallique (25), qui est enrobé dans ledit corps externe (12).

9. Élément additionnel selon la revendication 8, **caractérisé en ce qu'**il comprend une surface d'appui (16), à être placée, en pratique, contre ladite surface externe (2) ; lesdites surfaces d'adhésion et d'appui (21) (16) étant coplanaires l'une par rapport à l'autre.

10. Élément additionnel selon la revendication 8 ou la revendication 9, **caractérisé en ce que** ledit corps externe (12) comprend deux portions latérales (15), qui sont espacées l'une de l'autre et délimitées par les surfaces d'appui correspondantes (16), et **en ce qu'**il comprend au moins un dit corps magnétique correspondant (20), qui est partiellement incorporé dans chaque dite portion latérale (15).

11. Élément additionnel selon la revendication 10, **caractérisé en ce que** lesdites portions latérales (15) ont une forme allongée, et sont substantiellement parallèles l'une à l'autre, et **en ce qu'**il comprend une pluralité correspondante de dits corps magnétiques (20) incorporés dans chaque dite portion latérale (15).

12. Élément additionnel selon l'une quelconque des revendications 8 à 11, **caractérisé en ce qu'**il comprend en outre, des moyens sûrs de maintien (26) qui sont reliés audit corps externe (12) et peuvent coopérer avec ladite surface externe (2).

13. Élément additionnel selon la revendication 12, **caractérisé en ce que** lesdits moyens sûrs de maintien (26) comprennent un adhésif double-face (27), qui est collé à une surface d'appui (16) dudit corps externe (12), qui est distinct de ladite surface d'adhésion (21).

14. Élément additionnel selon l'une quelconque des revendications 8 à 13, **caractérisé en ce que** ledit corps métallique (25) est disposé en contact avec ledit corps magnétique (20).
